# EUROPEAN PATENT SPECIFICATION

(11) **EP 2 693 892 B1**
(45) Date of publication and mention of the grant of the patent: **04.03.2015**
(21) Application number: 12709084.3
(22) Date of filing: 14.03.2012
(51) Int. Cl.: A23L 1/03, A23L 1/05, A23L 1/0526, A23L 1/054, A23L 1/39, A23L 1/40

(54) **FOOD CONCENTRATE**
LEBENSMITTELKONZENTRAT
CONCENTRÉ ALIMENTAIRE

(30) Priority: 08.04.2011 EP 11161687
(43) Date of publication of application: 12.02.2014
(73) Proprietor: Unilever N.V., 3013 AL Rotterdam (NL); Unilever PLC, London, Greater London EC4Y 0DY (GB)
(72) Inventor: PERRINE, Marion Esclamonde, 74074 Heilbronn (DE); SAILER, Winfried, 74074 Heilbronn (DE)
(74) Representative: Tjon, Hon Kong Guno
(86) International application number: PCT/EP2012/054416
(87) International publication number: WO 2012/136454

(56) References cited:
- EP-A1- 2 229 825
- GB-A- 926 502
- JP-A- 8 112 069

## Description

The present invention relates to a process to prepare a packaged food concentrate with the appearance of a gel. It further relates to a packaged food concentrate comprising particulate food material. It further relates to a process to prepare a ready-to-eat end product.

### Background of the invention

Traditional formats of savoury food concentrates are dry or pasty tablets or cubes which are produced by compression or extrusion of an ingredient mixture. Such concentrates are known for example as a stock cube. In addition, concentrated products are known in granular form. Savoury food concentrates are usually diluted in an aqueous liquid to provide a ready to eat end product such as a soup or bouillon or are diluted in a dish to provide a flavouring to a dish or a meal.

A relatively new format of savoury food concentrates is a savoury food concentrate with the appearance of a gel. Such a concentrate is described for example in WO2007/068484. The food concentrate in the form of a gel provides a texture to the food concentrate which is recognized by consumers as a natural or "home-made" product. Home-made products like bouillons, soups or sauces often tend to gelatinize or solidify after cooling, at least in some extent, for example as a consequence of the use of meat and bones during preparation, in this way providing a jelly appearance to the cooled product.

EP 2229825 A1 discloses a packaged food concentrate comprising a gelling system and food materials. JP 8 112069 A discloses packaged instant noodles comprising a seasoning sauce containing a gelling agent.

An aspect which is further recognised as natural or "home-made" is a relatively high amount of particulate food material in the ready-to eat end product, such as for example chunks of vegetable or meat. Some consumers prefer that these particulate food materials are relatively large. When present in the food concentrate, this particulate food material preferably looks wet. Dry particles may provide an unnatural appearance to the food product. A concentrate with the appearance of a gel provides the advantage that it allows incorporation of moist ingredients, contributing to a natural and "home-made" appearance.

A problem observed with a process to prepare a food concentrate with the appearance of a gel as described in the art, is that the addition of a relatively high amount of particulate food material to the ingredient mixture results in complications during production. For example, a proper gel appearance may not be obtained, or the ingredient mixture can not be mixed without problems. For example, during mixing, a paste-like texture may result which can have a very high viscosity, complicating mixing, shearing, pumping, and filling procedures. Further, the desired amount of particulate food material may not fit in the food concentrate. An additional problem observed with a process as described in the art is that the integrity of the particulate food material may become damaged or is completely lost during mixing of the ingredients, especially if it comprises relatively large food particles. Complications are observed during the filling procedure where filling nozzles might get obstructed by particulate food material. A further problem is that the dilution speed of a concentrate comprising particulate material can be relatively low. A further problem is that after dilution of the food concentrate comprising particulate food material, the particulate material tends to collect at the bottom of the pan, cup or plate, whereas it is often preferred that it is more visible for the consumer. A further problem observed for conventional food concentrates in the form of a gel is that they may show syneresis, which is not always desired from a consumer perspective. Syneresis is a problem which may be increased in gels with relatively high salt levels.

### Summary of the invention

Therefore, it is an aim of the present invention, to provide a process to produce a food concentrate, which food concentrate allows to provide a ready-to-eat end product upon dilution in an aqueous liquid, and which, at least partly, overcomes above mentioned problems. The process preferably allows the production of a food concentrate with the appearance of a gel comprising a relatively high amount of particulate food material, preferably with relatively big dimensions, while maintaining a jelly appearance of the concentrate and the integrity of the particulate food material. It is a further aim to produce a food concentrate with the appearance of a gel, which allows to provide a ready-to-eat end product upon dilution of the concentrate, wherein the ready to eat end product comprises a relatively high amount of particulate food material, preferably comprises relatively large food particles. Therefore, the concentrate comprises a relatively high amount of particulate food material, and preferably comprises relatively large food particles. The particulate food material is preferably visible in the pan, cup or plate after preparation of the ready-to-eat food product, preferably at the surface of the ready-to-eat end product, such as a bouillon, a soup, or a sauce. Preferably, the particulate food material is present in the food concentrate in a moist state. The food concentrate preferably dissolves relatively fast, e.g. compared to a conventional food concentrate in the form of a gel, which may comprise some particulate food material. The food concentrate preferably shows a reduced amount of syneresis, e.g. when compared to a conventional food concentrate in the form of a gel which may comprise some particulate food material.

Surprisingly, the above mentioned problem was solved by a process to prepare a packaged food concentrate with the appearance of a gel, comprising the steps of:
a) Providing a solution comprising:
   - Water,
   - An effective amount of gelling system,
b) Combining the solution resulting from step a) with at least one item comprising compressed food material,
c) Packaging the combination resulting from step b),
d) Solidifying the combination resulting from step c),
to result in a packaged food concentrate with the appearance of a gel.

The invention further relates to a packaged food concentrate comprising:
- a gel matrix,
- at least one aggregate comprising particulate food material.

The invention further relates to a process to prepare a ready-to-eat end product comprising the step of dissolving a food concentrate according to the invention in an aqueous liquid, to result in a ready-to-eat end product.

### Detailed description of the invention

### Definitions

Gel matrix: The gel material which is combined with the items comprising compressed food material during the process of the invention, and wherein the aggregates comprising particulate food material are preferably embedded in the food concentrate.

Item comprising compressed food material: Compressed food material in the form of a solid unit, such as for example a pill or a tablet.

Aggregate comprising food material: a collection of particulate food material that is gathered together to form a quantity. The aggregate is the result of the "item comprising compressed food material", being combined with the gel matrix containing water. As a result of for example partly rehydration of the "item comprising compressed food material", the appearance and internal cohesion of the item may change, to result in an aggregate comprising particulate food material.

Particulate: in the form of particles.

### Step a

In a first step a) of the process of the invention, a solution is provided comprising water, and effective amount of gelling system. This solution provides the basis of the gel matrix of the food concentrate. The gelling system might be any gelling system, which is suitable to provide a gel matrix in the food concentrate of the present invention and can be used in the field of food products. "Effective amount" should be interpreted here as the amount suitable to form a solid (not fluid) gel matrix (after solidifying). Although the amount of gelling system might depend on factors such as the ingredients forming the gelling system and the salt content, it is in the art of the skilled person to determine relatively easily the appropriate amount of gelling system to provide a food concentrate with the appearance of a gel. For example, when gelatine is used as a gelling system, a relatively high amount of gelling system is preferred to provide a gel with the desired features. When polysaccharide hydrocolloids are used as a gelling system, relatively low amounts of gelling system may be sufficient.

In step a) of the process of the invention preferably a solution is provided comprising at least part, more preferably all of the water and the gelling system. In a preferred situation, in addition to water and gelling system, salt is also added in step a).

As known to the person skilled in the art, providing a solution comprising an effective amount of gelling agent in water may comprise a heating step. During such a heating step, the gelling system in the solution of step a) is dissolved and activated. Heating of the mixture comprising water and the gelling system is preferably at least up to the temperature where the gelling system is totally dissolved in the water, and activated. The presence of a heating step and the temperature depends on the individual ingredients forming the gelling system, as known to a person skilled in the art. Therefore, the step a) of providing a solution comprising water and an effective amount of gelling system preferably comprises heating, preferably heating at a temperature above the activation temperature of the gelling system. Preferably the heating step is carried out at a temperature of from 50°C to 100 °C, more preferably of from 55 °C to 95°C, most preferably of from 60°C to 90°C. It might be preferred that step a) comprises heating to a temperature of between 75°C and 100 °C, preferably 80°C and 95 °C, for example when the gelling system comprises xanthan gum and a galactomannan, preferably xanthan gum and locust bean gum.

Optionally, any other remaining ingredients may be added to the solution before or after dissolution of the gelling system, preferably before packaging. For example, the solution further may comprise salt, which is preferably added before optional heating.

### Step b

In step b), the solution resulting from step a) is combined with at least one item comprising compressed food material. The item comprising compressed food material preferably becomes surrounded with the solution resulting form step a). In this way, the item is inside of the food concentrate. Combining can be carried out in several ways. For example, part of the solution comprising water and gelling system is poured in the packaging, the at least one item comprising compressed food material is added and then the remainder of the solution comprising water and gelling system is added. Alternatively, the solution comprising water and gelling system can be added to the packaging, followed or preceded by addition of the at least one item comprising compressed food material. In these preferred ways, combining is carried out in the packaging. It is noted in this respect that a compression step on food material can be carried out inside of the packaging, to result in an item comprising compressed food material, preferably before the solution comprising the gelling system is added. In a third way, it may be preferred that a premix is prepared of the solution comprising the gelling system and the at least one item comprising, compressed food material, which premix is then filled into a packaging. How the solution comprising water and the gelling system is combined with the at least one item comprising compressed food material may for example depend on the type and size of the item comprising compressed food material, the number of items to be added, the type and size of packaging, the viscosity of the solution comprising water and the gelling system at the moment of filling and the temperature of the solution comprising water and the gelling system or of the item comprising compressed food material. For example, when some relatively small items comprising compressed food material are used, it may be preferred to use a premix. Whereas when one item comprising compressed food material is used, it may be preferred to add the solution comprising water and gelling system and the item in two or three steps, to minimize possible floating of the at least one item in the solution comprising water and the gelling system, possibly combined with a relatively low temperature of the solution comprising water and the gelling system and/or of the at least one item comprising compressed food material. It is in the art of a skilled person to combine the solution comprising water and the gelling system with the at least one item comprising compressed food material.

It might be preferred to add the at least one item comprising compressed food material in a chilled or frozen state. Preferably, in combining step b) the item comprising compressed food material is added at a temperature of the item of between -60°C and +10°C, preferably of between -30°C and +5°C, more preferably of between -20°C and 0°C. This proved especially advantageous, when the water activity of the item comprising compressed food material is higher than 0.65. Addition of the item comprising compressed food material in a frozen state reduces the risk of floating of the item during the step of combining the item comprising compressed food material and the solution comprising water and gelling system. It further might reduce the need for additional cooling during the solidifying step d).

### Step c

The process of the present invention comprises a packaging step c). Especially for unit-dosing applications, packaging is preferably done in a tub or a cup, which is preferably sealed after packaging. During unit dosing, the food concentrate is suitable to be removed and used in its entirety during the cooking process by the consumer, such as known from a stock cube, for example. During multi-dosing, on the contrary, part of the concentrate is removed from a relatively large packaging. For multi-dosage products, packaging may be done in a jar. Packaging is usually carried out before the solution comprising water and the gelling system has been solidified to form a gel matrix. As described above, at least part of the still liquid solution comprising water and the gelling system can be added to the packaging and the at least one item comprising compressed food material is added, or alternatively, the at least one item comprising compressed food material is added to the packaging, followed by addition of the solution comprising water and the gelling system or, alternatively, a premix of the solution comprising water and the gelling system and the at least one item comprising compressed food material is added to the packaging. Preferably, the combining step b) and packaging step c) are carried out simultaneously. Before the product is filled into the packaging, it may be cooled, preferably to a temperature of slightly above the gelation temperature of the gelling system. In this way the risk that the at least on item comprising compressed food material floats on top of the solution comprising water and gelling system is reduced.

### Step d

In step d) of the process of the invention, the combination of the solution comprising water and gelling system with the at least one item comprising compressed food material solidifies, to result in a food product with the appearance of a gel. Solidifying preferably comprises a temperature change, more preferably cooling. This is in particular relevant for thermo-setting gels. Cooling is preferably carried out by a cooling device or by allowing the combination of the solution comprising water and gelling system and the at least one item comprising compressed food material to cool down.

As an alternative for cooling, or in addition to cooling, solidifying may comprise a change in pH, and/or addition of a gelation-inducing ingredient, like for example counter ions. This is in particular relevant for non-thermo-setting gels. It is known to a person skilled in the art how to solidify thermo-setting gels and non-thermo-setting gels. By solidifying, the gelling system in the solution forms a gel matrix. Solidifying may require some progression of time, to allow the gel matrix to solidify, for example to allow diffusion of a gel-inducing ingredient in the entire colloidal solution of the gel. Solidification preferably takes place after a packaging step d).

### Maturation

After the gel matrix and the at least one item comprising compressed food material are combined and packaged, the resulting packaged food concentrate preferably maturates. The process of the invention preferably comprises a step of maturation of the food concentrate in the form of a gel. Maturation preferably takes from 1 week to 4 weeks. During maturation, an equilibrium in the content of water and other ingredients such as salt is reached between the gel matrix and the at least one item comprising compressed food material. During maturation, the item comprising compressed food material changes. The food material may partly hydrate and may gain a wet appearance. The food material originating from the item comprising compressed food material may be described now as an aggregate of particulate food material, as the food material is still gathered together and forms a quantity of food material which is not separated by the gel matrix.

### Gel matrix

The present invention relates to a process to prepare a packaged food concentrate. The invention further relates to a packaged food concentrate obtainable by the process of the invention. The food concentrate has the appearance of a gel. The food concentrate resulting from the process of the invention comprises a gel matrix and at least one aggregate comprising particulate food material. The at least one aggregate comprising particulate food material can be construed as a solid, non-gel phase. The gel matrix is preferably a continuous structure. A continuous structure should be understood as that the gel matrix is present in the product as one continuous structure and not as isolated areas of gel matrix. The at least one aggregate comprising particulate food material is embedded in the gel matrix, preferably, it is surrounded by the gel-matrix.

The appearance of a gel generally can be achieved in an aqueous environment when sufficient gelling system is present in the formulation. The person skilled in the art is able to recognize a gel, and to discriminate its texture from that of a liquid or of a paste. The gel matrix is preferably in the form of a gel. A gel should be understood as a texture that is substantially shape stable at 20 degrees C and is elastic, after removal from the packaging. Due to gravity, a relatively weak gel might (slightly) deform, after removal from its packaging. The gel structure of the matrix preferably allows removal from a plastic tub without significant damage, possibly with the help of a spoon. A gel texture shows elastic deformation. This type of deformation is to a large extent reversible. For example, after reducing deforming pressure, e.g. from gravity or gentle pressure by a finger, the shape will reform to a large extent to its original form. In addition, at 20° C, a gel in the context of the present invention does not flow, like a liquid, but is indeed solid. Further, at ambient temperatures (e.g. at 20° C), after cutting of the gel matrix in some pieces, the pieces of gel matrix usually cannot be substantially adhered and united by simple re-assembling of the gel matrix pieces, to form the original volume of the gel matrix.

In contrast to a gel, a paste does not show elastic deformation but shows a plastic deformation behaviour, at least, the plastic deformation is (much) higher than the elastic deformation. Thus, after deformation by pressure, a paste will hardly return towards its original shape, if at all. Also liquid products neither show elastic deformation, nor are they shape stable after removal from the package. It is therefore in the normal skill of the artisan, to assess whether a product is a gel or not.

More preferably, the gel matrix has a rheology wherein the ratio of the elastic modulus G' : the viscous modulus G" is higher then 1, preferably higher than 3, more preferably higher than 5. It can be preferred that that the viscous modulus G" is higher than 10 Pa, preferably higher than 50 Pa.

The rheology characteristics of the gel matrix are preferably be determined, especially for thermo-reversible gel systems, in the following way:.
Carefully separate manually the gel matrix from the aggregate comprising food material,
   - before measurement store the gel matrix at least 12h under ambient conditions, preferably 20C° and preferably a pressure of 1atm,
   - measurement temperature of 20 °C,
   - an oscillatory frequency of 1 Hz and
   - a strain in the linear viscoelastic region of 0.5%.

This set of parameters refers to a standard oscillatory test conducted with a standard state of the art low deformation rheometer as commercially available from e.g. Bohlin or TA Instruments.

Preferably, the hardness of the food concentrate of the present invention, is higher than 10 g, more preferably higher than 15 g, even more preferably higher than 20 g, most preferably higher than 30 g; and is preferably lower than 1500 g, more preferably lower than 1200 g, even more preferably lower than 1000 g. The hardness or gel strength is measured by a texture analysis, using the following method:
A texture analyser from Microstable Sytems, model TA XT2 with 5 kg load cell is used. A plunger is applied with the following characteristics: diameter (according to AOAC method): 0.5 inches, means 12.7 mm, height 35 mm, plane surface, sharp edges, plastics material.

The sample containers may have an influence on the measured results, therefore, the chosen container should always be of the same dimensions. In this analysis, plastic (PP) containers are used with the following dimensions: diameter bottom 5 cm; diameter top 6.3 cm; height of the container: 7.3 cm; Filling height: 5 cm). After preparation, samples are filled into the container at a temperature higher than the gelling point of the gelling system. The sample is stored at 5°C to allow quick gelling, within 24 hours. Measurements are done within 1 week after preparation and the product has to be at 20°C at least 24 hours before measurement.

The TA-parameters are: Pre speed 1 mm/s, Test speed 0.5 mm/s, Re speed 10 mm/s, Distance 15 mm, Trigger Auto, Force 0.5 g, Recording is stopped at target. The measured result taken from the recorded graph is the force at 10 mm penetration depth, expressed in grams.

### Water

Water is preferably added in step a) of the process in an amount of from 25 wt% to 80 wt%, preferably from 30 wt% to 70 wt%, more preferably of from 40 wt% to 65 wt%, based on the weight of the total food concentrate.

In the resulting food concentrate, the water content in the gel matrix preferably is of from 25 wt% to 80 wt%, more preferably of from 30 wt% to 70 wt%, most preferably of from 35 wt% to 65 wt%.

The water content in the aggregate comprising particulate food material is preferably of between 30 wt% and 75 wt% , preferably of between 35 wt% and 70 wt% more preferably of between 40 wt% and 65 wt%, based on the weight of the particulate food material.

The water activity (Aw) of the resulting food concentrate is preferably of from 0.65 to 0.80, more preferably of from 0.68 to 0.78, most preferably of from 0.70 to 0.75.

### Salt

The food concentrate preferably comprises salt in an amount of from 2 wt% to 25 wt%, preferably of from 4 wt% to 22 wt%, more preferably of from 5 wt% to 20 wt%, based on the weight of the total food concentrate. A too high salt content may result in oversaturation and precipitation of salt crystals, which is usually not preferred. Consequently, it is preferably added in these amounts to the solution in step a) of the process of the invention. Salt preferably comprises NaCl. Hence, preferably NaCl is present in an amount of from 2 wt% to 25 wt%, more preferably in an amount of from 4 wt% to 20 wt%, most preferably in an amount of from 5 to 18 wt% based on the weight of the total food concentrate.

Salt, preferably NaCl, is preferably present in an amount of from 5 wt% to 30 wt%, more preferably of from 10 wt% to 30 wt%, most preferably of from 15 wt% to 26 wt%, based on the weight of the water content of the total food concentrate. Salt, preferably NaCl, is preferably present in an amount of from 5 wt% to 30 wt%, more preferably of from 10 wt% to 30 wt%, most preferably of from 15 wt% to 27 wt%, based on the weight of the water content in the food concentrate. The amount of salt wt% based on the weight of the water content is calculated as (amount of salt (g)) / (amount of salt (g) + amount of water (g))) x 100%.

Salt is preferably NaCl. It may be preferred that salt further comprises other alkali metal salts such as KCl or NH₄Cl.

### Gelling system

The food concentrate of the present invention comprises a gelling system in an effective amount. Preferably, the total amount of gelling system present in the concentrate of the present invention is from 0.1 wt% to 30 wt%, more preferably of from 0.2 wt% to 20 w%, even more preferably of from 0.5 wt% to 15 wt%, even more preferably of from 0.5 wt% to 10 wt%, even more preferably of from 0.5 wt% to 5 wt%, even more preferably of from 0.5 wt% to 3 wt% based on the weight of the liquid phase of the total food concentrate, more preferably based on the water content of the total food concentrate. Liquid phase means ingredients liquid at room temperature and comprises at least water, liquid polyols, alcohols. It does not comprise liquid oil. Most preferably, the liquid phase is water. The amount of gelling system (wt%) is calculated as (amount of gelling system (g)) / (amount of gelling system (g) + amount of liquid phase (g)) x 100%.

In the context of the present invention, the term gelling system is not limited to one type of ingredient, but can also be a mixture of two or more ingredients, each as such not necessarily able to provide a gel texture on its own, provided together they can form a gel when dissolved and activated in an aqueous liquid. A gelling agent can in particular refer to a mixture of ingredients (e.g. gelling and/or thickening agents) that in combination form a gelling system or a more stable gelling system compared to the individual ingredients on their own. For example, "galactomannan in combination with xanthan gum" is referred to here as "gelling system". A gelling system may for example comprise gums and/or gelatinised starches and/or gel-providing proteins, like gelatine. Preferably, the gelling system comprises a hydrocolloid gelling system, preferably is a hydrocolloid gelling system. The hydrocolloid gelling system comprises preferably hydrocolloid polysaccharides and/or gelatine.

Preferably, the present invention relates to a food concentrate comprising a gelling system comprising one of the group consisting of gelatin, alginate, starch, modified starch, agar-agar, pectin, carrageenan, gellan gum, glucomannan, glucomannan in combination with xanthan gum, glucomannan in combination with carrageenan, glucomannan in combination with agar-agar, galactomannan in combination with xanthan gum, galactomannan in combination with carrageenan, galactomannan in combination with agar agar, and mixtures thereof.

Preferably, the present invention relates to a food concentrate comprising a gelling system, wherein the gelling system is selected from the group consisting of gelatine, agar-agar, modified starch, carrageenan, glucomannan, glucomannan in combination with xanthan gum, glucomannan in combination with carrageenan, glucomannan in combination with agar-agar, galactomannan in combination with xanthan gum, galactomannan in combination with carrageenan, galactomannan in combination with agar agar, and mixtures thereof.

Preferably, at least one of the individual gelling systems of this lists, when present, is present in an amount of at least 30 wt%, preferably at least 50 wt%, more preferably at least 75 wt%, even more preferably at least 90 wt% based on the weight of the total amount of gelling system present in the food concentrate.

Preferably, the gelling system comprises, more preferably is a polysaccharide hydrocolloid gelling system. The polysaccharide hydrocolloid gelling system is preferably present in a total amount of from 0.1 wt% to 15 wt%, more preferably of from 0.3 wt% to 7 wt%, even more preferably of from 0.4 wt% to 5 wt%., even more preferably in an amount of from 0.5 to 4 wt%, most preferably in an amount of from 0.6 to 3 wt% based on the weight of the liquid phase, preferably based on the water content of the total food concentrate. Preferably, a polysaccharide hydrocolloid gelling agent is present in an amount of at least 30 wt%, preferably at least 50 wt%, more preferably at least 75 wt%, even more preferably at least 90 wt% based on the weight of the total amount of gelling system present in the food concentrate.

The concentrate according to the invention may comprise starch as a gelling system. Preferably when starch is the only gelling system present in the food concentrate, it is preferably present in an amount of from 1 wt% to 30 wt%, more preferably in an amount of from 2 wt% to 25 wt%, most preferably in an amount of from 3 wt% to 15 wt%, based on the total weight of the water content of the food concentrate. Starch may be any form of starch, such as e.g. modified starch or non-modified starch. It may be corn starch, potato starch, or tapioca starch.

The gelling system can preferably comprise a combination of starch with gelatin. When combined with gelatin, a gelling system is provided that is stable at a relatively high salt content. To enable this effect, starch is preferably present in an amount mentioned above for starch as the gelling system. Gelatin is preferably present in an amount of from 0.5 wt% to 30 wt%, preferably of from 2 wt% to 20 wt%, most preferably of from 3 wt% to 15 wt%., based on the weight of the water content of the food concentrate.

When the gelling system is gelatin or comprises gelatine, gelatine is preferably present in an amount of form 0.5 wt% to 30 wt%, more preferably of from 1 wt% to 20 wt%, even more preferably of from 1.5 wt% to 15 wt%, even more preferably from 2 to 10 wt%, most preferably of from 2 to 5 wt%, based on the weight of the water content.

Preferably, the gelling system comprises an interactive combination of gums. The present invention preferably relates to a food concentrate in the form of a gel, wherein the gelling system is selected from the group consisting of: galactomannan in combination with xanthan gum, glucomannan in combination with xanthan gum, galactomannan in combination with carrageenan, glucomannan in combination with carrageenan, agar-agar in combination with galactomannan and mixtures thereof. Preferably, such a gelling system is present in a total amount of from 0.1 wt% to 20 wt%, more preferably of from 0.3 wt% to 10 wt%, even more preferably of from 0.5 wt% to 5 wt%., even more preferably in an amount of from 0.5 to 4 wt%, most preferably in an amount of from 0.6 to 3 wt% based on the weight of the liquid phase, preferably based on the water content of the total food concentrate. Preferably, an individual combination of gums from this group, is present in an amount of at least 30 wt%, preferably at least 50 wt%, more preferably at least 75 wt%, even more preferably at least 90 wt%, based on the weight of the total amount of gelling system present in the concentrate.

Preferably, the gelling system is selected from the group of a combination of xanthan gum with a glucomannan, a combination of xanthan gum with a galactomannan, gelatin, and mixtures thereof. More preferably, the gelling system is selected from the group of a combination of xanthan gum with a glucomannan, a combination of xanthan gum with a galactomannan, and mixtures thereof. The gelling sytems of the later group showed good resistance to relatively high salt contents, a good gel strength and/or low level of syneresis. A high salt content should be interpreted as from 15 wt% to 30 wt%, preferably of from 20 wt% to 26 wt% based on the water content of the total food concentrate. Preferably the gelling systems of these preferred groups are present in an amount of at least 30 wt%, preferably at least 50 wt%, more preferably at least 75 wt%, even more preferably at least 90 wt% based on the weight of the total amount of gelling system present in the food concentrate. Preferably, the galactomannan as used in combination with xanthan gum is selected from the group consisting of: locust bean gum, carob flour, guar gum, fenugreek gum, tara gum, cassia gum, and mixtures thereof. Examples of preferred glucomannans used in combination with xanthan are konjac mannan, konjac flour and mixtures thereof.

More preferably, the gelling system is a gelling system selected from the group consisting of the combination of xanthan gum with locust bean gum, the combination of xanthan gum with guar gum, and mixtures thereof. Most preferably, the gelling system is the combination of xanthan gum with locust bean gum. Locust bean gum showed optimal results in terms of gel strength and reduced syneresis. Preferably, any of these preferred gelling systems is present in a total amount of from 0.1 wt% to 20 wt%, more preferably of from 0.3 wt% to 10 wt%, even more preferably of from 0.5 wt% to 5 wt%, even more preferably in an amount of from 0.5 to 2 wt%, most preferably in an amount of from 0.6 to 1.5 wt% based on the weight of the liquid phase, preferably based on the water content of the total food concentrate. Preferably, any of these preferred groups of gelling systems are present in an amount of at least 30 wt%, preferably at least 50 wt%, more preferably at least 75 wt%, even more preferably at least 90 wt% based on the weight of the total amount of gelling system present in the food concentrate.

Preferably, xanthan gum is combined with a galactomannan or a glucomannan in a weight ratio of xanthan gum: glucomannan or xanthan gum : galactomannan of between 90:10 to 10:90, more preferably of from 85:15 to 15:85, even more preferably of from 80:20 to 20:80, even more preferably, of from 75:25 to 25:75.

Preferably, when carrageenan and agar-agar are used in a combination with a galactomannan or a glucomannan, the same preferred ratio's to a galactomannan or a glucomannan may apply as used for xanthan gum combined with a galactomannan or glucomannan.

The gel matrix of the concentrate of the present invention is preferably a thermo-reversible gel. Such a gel can be melted when heated above its melting point and forms a gel again after cooling below the gelling point. During processing, this may prove advantageous. The gelling systems comprising an interacting combination of gums, provide thermo-reversible gelling systems and provide a thermo-reversible gel matrix in the food concentrate.

Preferably, the present invention relates to a process to prepare a packaged food concentrate with the appearance of a gel, comprising the steps of:
a) Providing a solution comprising:
   - from 40 to 65 wt% of water (based on the weight of the total food concentrate),
   - xanthan gum and locust bean gum in a total amount of from 0.6 to 1.5 wt% (based on the weight of the liquid phase),
   - from 5 to 18 wt% of NaCl (based on the weight of the total food concentrate),
b) Combining the solution resulting from step a) with at least one item comprising compressed food material,
c) Packaging the combination resulting from step b),
d) Solidifying the combination resulting from step c),
to result in a packaged food concentrate with the appearance of a gel.

### Item and aggregate comprising food material

The solution comprising gelling system is combined with an item comprising compressed food material. The food material preferably comprises particulate food material. Therefore, the particulate food material in the present invention is not homogenously distributed through the food concentrate, but arranged in at least one separate item comprising compressed food material. This type of compressed food item and the way to produce it has been described in the art, for example in US 3950560. The item comprising compressed food material can be prepared by drying or hydrating food material to a water content of preferably between 5 % and 30 %, followed by compression, optionally followed by a drying step. As used in the process of the present invention, the at least one item comprising compressed food material preferably has a water content of from 1 to 30 wt%, preferably of from 5 to 25 wt% based on the weight of the at least one item comprising compressed food material.

The compressed food material is preferably freeze-dried compressed food material, which is preferably rehydrated to a water content of between 5 and 30 wt% before compressing. It can also be puffed compressed food material. Puffing is a technique known in the art, used for example to obtain porous dry vegetables (EP0461718).This type of items comprising compressed food material is usually combined with dry applications, in order to maintain preservation and a stable texture of the item or the product that contains the item. Counter-intuitively, it was found now that the use of this type of relatively dry compressed items solved several problems relating to providing food concentrates with the appearance of a gel, which usually have a relatively high water content (preferably 25 to 80 wt% in the present invention) The item comprising compressed food material preferably has the shape of a sphere, a prism or a cylinder, preferably of an oval cylinder or a cube. The size of the item comprising compressed food material is preferably of from 0.5 cm to 20 cm, preferably of from 1 to 10 cm, more preferably of from 1.5 to 5 cm. It can in this way form a pill or a tablet which is combined with the solution comprising water and the gelling system to form a food concentrate according to the present invention. It is preferred that the food concentrate comprises one item comprising compressed food material and the shape of the item comprising compressed food material resembles the shape of the food concentrate when present in the packaging. In this way, a maximum amount of compressed food material can be present in the food concentrate without being visible, if this is desired.

The food concentrate is produced with at least one item comprising compressed food material. The amount of compressed items is not limited to a single item, although this may be preferred. It may be preferred that in step b) of the process of the invention the solution comprising water and gelling system is combined with from 1 to 10, preferably with from 1 to 5, more preferably with from 1 to 3 items comprising compressed food material. Consequently, the resulting food concentrate preferably comprises from 1 to 10, preferably from 1 to 5, more preferably from 1 to 3 aggregates comprising particulate food material.

The at least one item comprising compressed food material preferably comprises from 70 to 100 wt%, more preferably from 90 to 100 wt%, even more preferably of from 95 to 99 wt% of compressed food material, based on the weight of the at least one compressed food item.

It may be preferred that the item comprising compressed food material comprises a binder. A binder may preferably be one of the group consisting of maltodextrin, sugar, glucose syrup and mixtures thereof. Preferably, the binder comprises maltodextrin.

The total volume of the at least one item comprising compressed food material is preferably of from 10 vol.% to 90 vol.%, more preferably of from 15 vol.% to 70 vol.%, even more preferably of from 20 vol.% to 60 vol.%, based on the volume of the total food concentrate. These volume percentages are as calculated at the moment of preparation, as the volume of the compressed food material may change after contact with the gel matrix.

Accordingly, the weight of the at least one item comprising compressed food material is preferably of from 2 wt.% to 95 wt.%, more preferably from 2 wt% to 85 wt%, more preferably of from 10 wt% to 70 wt%, even more preferably of from 15 wt% to 60 wt%, based on the weight of the total food concentrate. It could be from 10% to 50 wt% or from 15% to 25 wt%, based on the weight of the total food concentrate.These weight percentages are calculated as after a period of maturation, as the weight of the compressed food material may change after contact with the gel matrix.

Preferably, the at least one item comprising compressed food material has a weight of from 10 g to 2400 g, preferably of from 15 to 500 g, more preferably of from 20 g to 200 g, as measured in rehydrated state.

The food material as present in compressed form in the item to be added, and as present in the aggregate in the food concentrate preferably is material selected from the group consisting of vegetables, mushrooms, herbs, meat, fish, crustaceans (including shrimps), pasta and mixtures thereof. The amount of pasta is preferably less than 80 wt%, preferably less than 50 wt%, most preferably less than 20 wt%, based on the weight of the item in case of the process of the invention or based on the weight of the aggregate, in case of the resulting packaged food concentrate according to the invention.

Preferably, the vegetables comprise material selected from the group consisting of broccoli, beans, corn, peas, cauliflower, zucchini, leek, bell pepper, asparagus, carrot, celeriac and mixtures thereof. Preferably the herbs comprise material selected from celery, parsley, chive, lovage, thyme, marjoram, and mixtures thereof.

Upon dilution of the product the dry compressed food material gets hydrated. The volume of the individual particulate food material increases. Preferably at least 80% (by weight) of the compressed food material, and/or consequently, of the particulate food material as present in the aggregate, has a size larger then 0.5 mm, preferably larger than 1 mm, more preferably larger than 3 mm, even more preferably larger than 5 mm, even more preferably larger than 10 mm and the size is preferably lower than 50 mm, preferably lower than 40 mm, more preferably lower than 30 mm, most preferably lower than 25 mm. A preferred size can be for example of between 0.5 and 50 mm, preferably of from 1 mm to 40 mm, more preferably of from 3 mm to 30 mm, more preferable of between 5 mm and 25 mm. The size is measured in rehydrated state and along the longest diameter of the particle.

Preferably the item comprising compressed food material is coated and as a result comprises a coating. The coating preferably comprises one of the group consisting of fat, carbohydrate, fiber, liquid polyol and mixtures thereof. A preferred carbohydrate is starch. A preferred liquid polyol is glycerol. A preferred fiber is hydroxypropyl methylcellulose. Fat is preferably a fat with a melting point of higher than 20°C. A coating appeared advantageous as it improved the quality of the resulting food concentrate. Without willing to be bound by theory, it is believed that a coating reduces the speed of water uptake at least during the period that the gelling system is solidifying, in this way reducing premature swelling of the compressed food material, resulting in improved product quality.

### Food concentrate and Dilution

The present invention relates to a food concentrate. The food concentrate is preferably obtainable by the process of the present invention. A concentrate is a food product that is usually diluted before consumption. In this way, it should be discriminated from a ready-to-eat product, which is normally consumed as such, without dilution.

The food concentrate preferably has a weight of from 10g to 300 g. The food concentrate preferably has the shape of a sphere, a prism, a cone or a cylinder, more preferably of an oval cylinder or truncated cone. Especially the latter two shapes were most advantageous in preparation and removal of the concentrate from the packaging.

To enable dilution of the concentrate of the present invention, the concentrate should be dissolvable in water, preferably at for example 90°C. Dissolvability should be preferably relatively fast. Preferably a concentrate according to the present invention with a size of 37g dissolves in 500 ml water of 90°C, using stirring, e.g. by using wire whisk, in a time period of less than 4 minutes, more preferably less than 3 minutes, even more preferably less than 2 minutes. This is the way a consumer would normally use the product of the invention. It was observed in conventional concentrates that particulate food material may sometimes have a negative effect on dilution speed of food concentrate in the form of a gel. Counter-intuitively, it was observed that a food concentrate wherein the particulate food material was added as compressed material according to the invention, the dilution of the concentrate improved considerably compared to the dilution of gel concentrates without particulate material or gel concentrates wherein the particulate material was added in non-compressed form, e.g. as freeze dried (non-compressed) or frozen particles. This effect was observed even when high amounts of particulate food material were used (based on the weight of hydrated particulate food material).

The invention further relates to a process to produce a ready-to-eat end product, comprising the step of dissolving a food concentrate according to the invention in an aqueous liquid, to result in a ready-to-eat end product. The food concentrate of the present invention is preferably a concentrate for preparing a bouillon, a soup or a sauce. The food concentrate might also be a concentrate for use as a seasoning. For the latter purpose, the concentrate of the invention may be added to a prepared dish, preferably a liquid dish, wherein it melts and becomes diluted and the particulate food material preferably becomes hydrated. The concentrate might also for example be added to the cooking water of noodles, wherein it dissolves, in this way providing its seasoning effect to the noodles. The ready to eat end product is therefore preferably a bouillon, a soup, a sauce or a seasoned dish.

As the concentrate of the present invention is a concentrated product, it should preferably allow dilution of between 2 to 40 times, preferably of between 3 and 20 times, more preferably of between 4 and 10 times, based on the weight of the product, to result in a ready-to-eat end product.

After dilution of the concentrated food product in an aqueous liquid, the compressed food material becomes hydrated, and the dilution results in a ready to eat end product. Preferably the at least one item comprising, compressed food material is added during preparation of the food concentrate in an amount to provide an amount of hydrated food material in the ready to eat end product of from 5 to 50 g/500ml, preferably of from 10g to 40 g/500ml. Consequently, preferably the food concentrate comprises at least one aggregate comprising particulate food material in an amount to provide an amount of hydrated food material in the ready to eat end product of from 5 to 50 g/500ml, preferably of from 10 g to 40 g/500ml. The amount of particulate food material in the ready to eat end product is preferably of from 1 to 30 wt%, more preferably of from 1 to 15 wt%, more preferably of from 5 to 12 wt%. These amounts are preferably combined with a salt content in the ready to eat end product which is preferably of between 0.5 and 1.5 wt%, more preferably of from 0.7 to 1.2 wt%. As indicated above, these amounts are preferably reached after dilution of between 2 to 40 times, preferably of between 3 and 20 times, more preferably of between 4 and 10 times, based on the weight of the product.

Preferably the invention relates to a packaged food concentrate which further comprising salt, wherein the food concentrate after dilution in an aqueous liquid can result in a ready-to-eat end product comprising salt in an amount of from 0.5 wt% to 1.5 wt%, and particulate food material in an amount of from 1 wt% to 30 wt% of, based on the weight of the ready to eat end product.

As indicated above, the weight of the at least one item comprising compressed food material as used in the process of the present invention is from 2 wt% to 95 wt%, preferably of from 10 wt% to 70 wt%, more preferably of from 15 wt% to 60 wt%, based on the weight of the total food concentrate. This is calculated as after a period of maturation, as the weight of the compressed food material may change after contact with the gel matrix. After this maturation time, the item comprising compressed food material usually beomes in the form of an aggregate comprising food material. Consequently, the weight of the aggregate comprising particulate food material is preferably of from 2 wt% to 95 wt%, preferably of from 10 wt% to 70 wt%, more preferably of from 15 wt% to 60 wt%, based on the weight of the total food concentrate.

The size of the particulate food material as present in the ready-to-eat end product is preferably of between 0.5 mm to 50 mm, more preferably of from 1 mm to 40 mm, even more preferably of from 3 mm to 30 mm, most preferably of from 5 mm to 25 mm. This size is measured of the longest diameter of the particle. For example, mushrooms or slices thereof or broccoli florets can be about 2 cm, beans can be up to 5 cm.

### Advantages

The process of the present invention allows incorporation of food material in an amount which is not reached in a conventional production process of food concentrates in the form of a gel. In addition, the appearance of a gel is maintained and the food concentrate does not become a paste. During the process, the integrity of relatively large particles of food material is not destroyed. The process is efficient, filling of the packaging is not hindered by obstruction of the filling nozzles. The complications observed when a conventional preparation process is used are overcome.

The food concentrate of the present invention showed improved dissolution properties and reduced syneresis of liquid from the gel matrix of the food concentrate. It showed improved visibility of the particulate food material at the surface of the ready to eat product resulting after dilution.

### Examples:

**Example 1a:** Freeze dried vegetables compressed

**Table 1. Ingredients example 1a**

| **Gel solution** | **Recipe** |
|---|---|
| ***Ingredients*** | *wt%* |
| Added water | 67.1 |
| Added salt | 22.4 |
| Monosodium glutamate (msg) | 9.6 |
| Gelling agent (Xanthan and LBG, Ratio 70:30) | 0.9 |
| ***TOTAL*** | 100 |
| *%wt of gel phase on final product at the moment of production* | 78.2 |
| | |

| **Item comprising compressed food** | **Recipe** |
|---|---|
| ***Ingredients*** | *wt%* |
| Freeze dried broccoli (rehydrated to a moisture content of 19,5 %wt) | 100.0 |
| ***TOTAL*** | 100.0 |
| *%wt of compressed food unit(s) on final product at the moment of production* (rehydrated to a moisture content of 19,5 %wt) | 21.8 |
| *%wt of item comprising compressed food on final product calculated on dry base (excluding water amount used for the production of the compressed food units)* | 18.7 |

### Preparation of item comprising compressed food

The dry vegetables (freeze dried broccoli pieces with a floret size of 12 mm) were rehydrated using controlled steam diffusion in a convectomat to a moisture content of 19.5%. The rehydrated vegetables are conditioned in closed hermetical plastic bags for about 1 hour for water equilibration. Vegetables were then weighed (here 7 grams) and pressed into items, using oval moulds in order to exploit the oval shape of the packaging optimally and with a pressure of 4 bars to obtain stable items.

### Preparation of the gel solution

The gel solution has been prepared on labscale on a *Vorwerk* Thermomix TM31 Varoma with the following process (batch size: 2kg):
Water was given into the mixing vessel, the pre-mixed dry ingredients including gelling agents, msg and salt were added into the mixture while shearing at level 4 and heating up to 85°C to until a homogenous mixture was obtained. The mixture was kept for 3 min at 85°C.

### Combining and packaging

A 3-filling-steps combining step was used:
1) A thin layer of the gel solution (around 40%wt of the total gel phase) was poured into plastic tubs (oval truncated cone, ca. 46 x 32 x 22 mm).
2) The item comprising dry, compressed food material was positioned on the gel layer (at a temperature of less than 50°C) and slightly pressed.
3) The remaining (around 60%wt) of the gel solution at a temperature of 65°C was poured into the tub to surround the item comprising dry, compressed food material.
Tubs were sealed and left to cool at room temperature, to allow solidification of the gel solution to a gel matrix.

### Maturation

The product was stored at room temperature for 2 weeks to allow a transfer of water and salt between the gel matrix and the aggregate comprising food material (previous item comprising dry, compressed food material). As a result, the weight proportion of the aggregate comprising food material on the total product was increased to 84%wt.

No syneresis was observed.

### Dilution

The resulting concentrate of 32 gram was diluted in 500 mL of boiling water to prepare a ready-to-eat end product in the form of a soup. The dissolution time was about 1 minute, without additional shearing or stirring. Rehydration of the broccoli pieces during a cooking time of 2 minutes resulted in a vegetable content (as rehydrated) of 9.1 %wt of the weight of the ready-to-eat end product.

### Comparative example 1b: freeze dried vegetables non compressed

A product was prepared using the same gel solution as described under Example 1a, in an amount of 81.3 wt% based on the weight of the total final product at the moment of preparation. The gel solution was combined with freeze dried broccoli (non-compressed, moisture content 5 wt%), in an amount of 18.7 wt% based on the weight of the total final product at the moment of preparation. The combination was heated to 85°C while stirring, to obtain a mixture. The resulting mass was a dough-like paste. Filling the packaging was very cumbersome as pouring into tubs was not possible. The freeze dried vegetable material had lost its integrity. The tubs were then sealed and allowed to cool at room temperature.

The products were stored for 1 week at room temperature. The product was pasty and no elasticity was observed. It did not have the appearance of a gel. Hardly any individual pieces of vegetable material, could be observed, if at all and the bigger chunks were shattered.

### Comparative Example 1c: frozen vegetables:

**Table 2. Ingredients comparative example 1c.**

| **Gel solution** | **Recipe** |
|---|---|
| ***Ingredients*** | **%wt** |
| Added water | 46.5 |
| Added salt | 36.4 |
| MSG | 15.6 |
| Gelling agent (xanthan gum and Locust bean gum, ratio 70:30) | 1.4 |
| ***TOTAL*** | 100 |
| %wt of gel phase on final product at the moment of production | 61.5 |
| **Incorporated vegetables :** Deep Frozen broccoli (moisture content of about 90 wt %) | |
| *wt% of deep frozen vegetables on final product* at the moment of production | 38.5 |
| *wt* % *of vegetables on final product calculated on dry base* | 3.85 |

### Preparation of gel solution

The gel solution was prepared on a *Vorwerk* Thermomix TM31 Varoma with the following process (batch size: 2kg):
Water was added to the mixing vessel, the pre-mixed dry ingredients including gelling agents, but only with 50% of the salt was added into the mixture while stirring at level 4 and heating up to 85 °C to obtain a homogenous mixture. The mixture was hold for 3 min at 85°C.

The frozen vegetables and the remaining 50% of salt were added into the mixture. The whole mass was reheated to 85°C while further shearing. The mixture was transferred to packaging tubs, which were then sealed.

The products were allowed to cool down and solidify and stored for 1 week at room temperature. The resulting product is relatively weak and foamy, which complicated removal from the packaging. The vegetable particles were disintegrated.

After 4 minutes in boiling water, the concentrate was still not dissolved (conditions similar as in Example 1a).

### Example 2: Clear vegetable soup (Minestrone)

**Table 3. Ingredients example 2**

| Gel solution | **Recipe** |
|---|---|
| ***Ingredients*** | ***wt* %** |
| Added water | 60.3 |
| Added salt | 20.3 |
| Fat | 9.3 |
| Sugar | 4.7 |
| Dry yeast extract(s) (9.5% salt) | 3.4 |
| Dry taste imparting component(s) (11.5% salt) | 1.3 |
| Colourant(s) | 0.1 |
| Gelling agent (xanthan gum and Locust bean gum, ratio 70:30) | 0.7 |
| *TOTAL* | 100 |
| Wt% of gel phase on final product at the moment of production | 78.1 |
| | |

| **Items comprising compressed food** | **Recipe** |
|---|---|
| ***Ingredients*** | ***wt%*** |
| Puffed Carrots (rehydrated to a moisture content of 15.9%wt) | 28.6 |
| Beans freeze dried (rehydrated to a moisture content of 13.8%wt) | 28.6 |
| Zucchini freeze dried (rehydrated to a moisture content of 16.9%wt) | 28.6 |
| Parsley freeze dried (rehydrated to a moisture content of 21.7%wt) | 14.3 |
| ***TOTAL*** | 100 |
| Wt% of compressed food unit(s) on final product at the moment of production | 21.9 |

### Preparation of the gel solution

The gel solution was prepared in an Unimix LM6 apparatus using the following process (batch size: 5kg):
Water was added into the mixing vessel and heated up to 75°C. Both stirring (150 rpm) and homogenizing (5000 rpm) units were used during the entire process.

Pre-mixed dry ingredients including gelling agents, salt, sugar, yeast extract, taste imparting components and colourants were added into the water of 75°C and the mixture was further heated during homogenization to allow dilution and dissolving of the dry ingredients into water. Fat was added when the mixture had a temperature of 80°C. Mixing was continued to obtain further homogenisation and heating was continued to 85°C. After a pasteurization of 4 minutes at 85°C, the mixture was ready to be combined with items comprising dry, compressed food material.

### Preparation of items comprising compressed food material

### Dry vegetables were rehydrated as described in example 1a, to a moisture content as indicated in the table 3 for Example 2.

Vegetables were weighted and pressed into tablets, using a rectangular mould and with a pressure of 4 bars to obtain stable rectangular tablets. For this example vegetables were combined in different ways:
a) All vegetables were mixed together before compression, to give one tablet with mixed vegetables (ca. 39 x 25 x 10 mm);
b) Vegetables were added in layers into the mould, to give one tablet with 4 different layers (ca. 39 x 25 x 10 mm);
c) The different vegetables were pressed separately to give 4 thin tablets (ca. 39 x 25 x 1.5-3 mm).

### Combining

1) A layer of the gel solution (24%wt of the total gel phase) was poured into plastic tubs (oval ca. 46 (50) x 32 (37) x 22 mm).
2) The different tablets (a mixed tablet (variant a) or a tablets with layers (variant b) or 4 separate relatively thin tablets (variant c)) were positioned on the layer of gel solution with a temperature of ca. 50°C, and slightly pressed to increase adhesion of the tablets to the layer of gel solution, to prevent disattachment and floating.
3) The remaining 76 wt % of gel solution was poured on top (at a temperature of 75°C), so that the tablet was totally covered.

Tubs were sealed and left to cool at room temperature. The gel solution was allowed to solidify to result in a gel matrix.

### Maturation

Products were stored at room temperature for 2 weeks to allow maturation. During that time, the product stabilised and water and salt transferred from the gel phase (gel matrix) to the aggregate, which led to a change in weight proportion of the two phases, as indicated in table 4:

**Table 4. Relative proportions of gel phase and aggregates comprising food material after maturation. The indicated percentages may vary by about 10% (SD), depending on tablet size and shape.**

| **After maturation time** | **Mixed tablets (a)** | **Layered tablet (b)** | **4 single tablets (c)** |
|---|---|---|---|
| *wt % of gel phase on final product* | 54.5 | 43.6 | 40.7 |
| *wt % of aggregate on final product* | 45.5 | 56.4 | 59.3 |

The final product had the appearance of a gel, was shape-stable with a certain elasticity, and no syneresis was observed.

### Application

The resulting products (31.5 to 32.0 g) were dissolved in 500 mL hot water and cooked for 2 min. During dissolution, relatively big vegetable pieces appeared progressively, floating on the surface. The size of the particles was about 20 mm for parsley florets, 5-8 mm for carrots and 7-10 mm for beans. In the resulting diluted product, the proportion of vegetables on the total ready-to-eat end product was 8.5 wt % (10.4 volume %), for all 3 product variants.

### Example 3: Chicken soup (clear soup)

**Table 5: Ingredients Example 3.**

| **Gel solution** | **Recipe** |
|---|---|
| ***Ingredients*** | ***%wt*** |
| Added water | 62.8 |
| Added salt | 20.9 |
| Fat(s) and/or oil(s) | 6.7 |
| Sugar | 3.3 |
| Dry yeast extract(s) (10.9% salt) | 1.9 |
| Other dry taste imparting component(s) (21.2% salt) | 3.5 |
| Colourant(s) | 0.3 |
| Gelling agent (Xanthan and LBG, Ratio 70:30) | 0.8 |
| ***TOTAL*** | 100 |
| wt% of gel phase on final product at the moment of production | 79.4 |
| | |

| **Items comprisign compressed food material** | **Recipe** |
|---|---|
| ***Ingredients*** | **%*wt*** |
| Puffed carrots (rehydrated to a moisture content of 15.9%wt) | 28.6 |
| Leek freeze dried (rehydrated to a moisture content of 21.5%wt) | 28.6 |
| Chicken freeze dried (rehydrated to a moisture content of 20.9%wt) | 42.8 |
| ***TOTAL*** | 100 |
| wt% of compressed food unit(s) on final product at the moment of production | 20.6 |

### Preparation of the gel solution

The gel phase was prepared as described in example 2.

### Preparation of items comprising compressed food material

The dry vegetables were rehydrated as described in example 1 a, to a moisture content as indicated in table 5. Vegetables were weighed and pressed into tablets, using a rectangular mould and with a pressure of 4 bars to obtain stable rectangular tablets. For this example vegetables were all mixed together before compression, to give only one type of tablets with mixed vegetables (ca. 39 x 25 x 22 mm).

### Combining and packaging

In this example the gel solution and the item comprising compressed food material were combined in different ways.

### a) 3 Filling steps:

1) A layer of the gel preparation (37%wt of the total gel solution) was poured into plastic tubs (oval ca. 46 (50) x 32 (37) x 22 mm).
2) One tablet comprising compressed food material was positioned on each layer of gel solution (at a temperature of 50°C) and was slightly pressed to increase adhesion of the tablet to the gel layer, to avoid disattachment and floating.
3) The remaining 63 wt % of gel solution was poured on top of the tablet (at a temperature of 70°C), so that the tablet was totally covered.

### b) 2 Filling steps: tablet - gel:

1) A tablet comprising compressed food material was put into an empty tub.
2) Gel solution was poured over (at a temperature of 53°C).

### c) 2 Filling steps: gel - tablet:

1) The gel solution was poured into an empty tub.
2) A tablet comprising compressed food material was pressed into the gel solution (which had a temperature of 60°C, so that the tablet was totally covered.

Tubs were then sealed and left to cool at room temperature. The gel solution was allowed to solidify to form a gel matrix.

### Maturation

The resulting products were stored at room temperature for 2 weeks to allow maturation. During that time, the products stabilised and water and salt transferred from the gel phase to the aggregate, which led to a change in weight proportion of the two phases, as indicated in Table 6:

**Table 6. Relative weight proportions of the gel phase and aggregates comprising food material after maturation. The indicated percentages may vary by about 10% (SD), depending on tablet size and shape.**

| **After maturation time** | **3 Filling steps (a)** | **2 Filling steps tablet - gel (b)** |
|---|---|---|
| *%wt of gel phase on final product* | 48.8 | 50.9 |
| *%wt of aggregate on final product* | 51.2 | 49.1 |

The final product has the appearance of a gel, is shape-stable with a certain elasticity, and no syneresis was observed.

### Dilution

The resulting products (34.0 to 34.5 g) of variant b) were dissolved in 500 mL hot water and cooked for 2 min. During dissolution, relatively big vegetables pieces appeared progressively, floating on the surface of the soup. In the resulting ready-to-eat end product, the proportion of vegetables on the total product was 5.4 wt % (7.9 volume %). The size of the particles after hydration was: chicken pieces: around 5 mm, carrots: 5-8 mm, leek: 10-20 mm.

### Example 4: "Zigeuner" sauce

**Table 7: ingredients Example 4**

| **Gel solution** | | | |
|---|---|---|---|
| ***Ingredients*** | ***%wt*** | | |
| Added water | 42.3 | | |
| Added salt | 10.6 | | |
| Fat(s) | 4.0 | | |
| Sugar | 4.0 | | |
| Meat extract (65° Brix) (35%wt moisture, 8%wt salt) | 4.4 | | |
| Dry yeast extract(s) (18.0%wt salt) | 1.3 | | |
| Dry taste imparting component(s) (32.7%wt salt) | 9.9 | | |
| Colourants | 2.8 | | |
| Gelling agent (Xanthan and LBG, Ratio 50:50) | 0.6 | | |
| Corn starch native (11,6 wt % moisture) | 20.1 | | |
| ***TOTAL*** | 100.0 | | |
| ***%wt of gel phase on final product*** | 78.1 | 83.3 | 83.3 |
| | | | |

| **Item comprising compressed food material** | **Recipe 4A** | **Recipe 4B** | **Recipe 4C** |
|---|---|---|---|
| ***Ingredients*** | ***%wt*** | ***%wt*** | ***%wt*** |
| Onions air dried (rehydrated to a moisture content of 11.0%wt) | 35.7 | 50.0 | 50.0 |
| Bell pepper red freeze dried (rehydrated to a moisture content of 16.6%wt) | 32.1 | 0.0 | 50.0 |
| Bell pepper green freeze dried (rehydrated to a moisture content of 22.4%wt) | 32.1 | 50.0 | 0.0 |
| ***TOTAL*** | 100 | 100 | 100 |
| ***%wt of compressed food unit(s) on final product*** | 21.9 | 16.7 | 16.7 |

### Preparation gel solution

The gel phase was prepared on labscale on an Unimix LM6 with the following process (batch size: 5kg):
Water was added into the mixing vessel and heated up to 75°C. Both stirring (150 rpm) and homogenizing (5000 rpm) units were used over the whole process. Pre-mixed dry ingredients including gelling agents but not including the starch were added into the mixture at 75°C and the mixture was further heated during homogenization to allow dilution of the dry ingredients into water. After a pasteurization of 4 min at 85°C, the mixture was cooled down to 59°C. At that temperature the starch was added into the vessel (3 min addition time) and the mixture was further homogenized during 3 min at 8000 rpm. During addition of the starch, a decrease in temperature of the mixture was observed down to 57°C.

### Preparation of items comprising compressed food material

The dry vegetables were rehydrated as described in example 2 to a moisture content as indicated in Table 7.

Vegetables were weighed and pressed into tablets, using an oval mould and a pressure of 4 bars to obtain stable oval tablets.

### Combining and packaging

Packaging and combining was carried out in three steps:
1) A layer of the gel solution (40 wt % of the total gel solution) was poured into plastic tubs.
2) The tablet comprising compressed food material (for recipes 4B and 4C: 39 x 25 x 10 mm) were positioned on the gel layers (at a temperature of 30°C) and slightly pressed to increase adhesion of the tablets to the gel layer, to avoid disattachment and floating.
3) The remaining 60 wt % of the gel solution was poured into the packaging (at a temperature of 57°C), so that the tablet was totally covered.

Tubs were sealed and allowed to cool at room temperature. The gel solution was allowed to solidify to form a gel matrix.

### Maturation

The resulting food concentrates were stored at room temperature for 2 weeks to allow maturation. During this time, the products stabilised and water and salt transferred from the gel matrix to the aggregate. This led to a change in the weight proportion of the two phases, as indicated in Table 8:

**Table 8. Relative weight proportions of the gel phase and aggregates comprising food material after maturation. The indicated percentages may vary by about 10% (SD), depending on tablet size and shape.**

| **After maturation time** | **Recipe 4A** | **Recipe 4B** | **Recipe 4C** |
|---|---|---|---|
| *%wt of gel phase on final product* | 60.5 | 66.5 | 68.9 |
| *%wt of aggregate on final product* | 39.5 | 33.5 | 31.1 |

The final product has the appearance of a gel, is shape-stable with a certain elasticity, and no syneresis was observed.

### Dilution

The food concentrate of recipe 4A was first dissolved in 250 mL hot, non boiling water and the solution was then cooked for 1 min. During dissolution, relatively big vegetables pieces appeared progressively, floating on the surface. In the resulting ready to eat end product, the proportion of vegetables based on the weight of the total ready to eat end product was 11.6 %wt (14.3 %volume). The size of the particles after hydration was: green bell pepper: 5-10 mm, red bell pepper: 5-10 mm, onions: about 10mm.

## Claims

1. Process to prepare a packaged food concentrate with the appearance of a gel, comprising the steps of:
a) Providing a solution comprising:
• Water,
• An effective amount of gelling system,
b) Combining the solution resulting from step a) with at least one item comprising compressed food material,
c) Packaging the combination resulting from step b),
d) Solidifying the combination resulting from step c),
to result in a packaged food concentrate with the appearance of a gel.

2. Process according to claim 1, wherein the at least one item comprising compressed food material has a water content of from 1 to 30 wt%, preferably of from 5 to 25 wt% based on the weight of the at least one item comprising compressed food material.

3. Process according to any one of the preceding claims, wherein the solution of step a) comprises from 2 to 25 wt% of salt, based on the weight of the total food concentrate.

4. Process according to claim 1, comprising the steps of:
a) Providing a solution comprising:
• from 40 to 65 wt% of water (based on the weight of the total food concentrate),
• xanthan gum and locust bean gum in a total amount of from 0.6 to 1.5 wt% (based on the weight of the liquid phase),
• from 5 to 18 wt% of salt (based on the weight of the total food concentrate),
b) Combining the solution resulting from step a) with at least one item comprising compressed food material, wherein the item comprising compressed food material has a water content of from 1 to 30 wt%, preferably of from 5 to 25 wt% based on the weight of the item.
c) Packaging the combination resulting from step b),
d) Solidifying the combination resulting from step c),
to result in a packaged food concentrate with the appearance of a gel.

5. Process according to anyone of the preceding claims, wherein the at least one item comprising compressed food material comprises a coating.

6. Process according to anyone of the preceding claims, wherein the weight of the at least one item comprising compressed food material is from 2 wt% to 95 wt%, preferably of from 10 wt% to 70 wt%, more preferably of from 15 wt% to 60 wt%, based on the weight of the total food concentrate.

7. Process according to anyone of the preceding claims, wherein in step b) the mixture is combined with from 1 to 10, preferably from 1 to 5, more preferably from 1 to 3 items comprising compressed food material.

8. Process according to anyone of the preceding claims, wherein the compressed food material is selected from the group consisting of vegetables, mushrooms, herbs, meat, fish, crustaceans, pasta and mixtures thereof.

9. Process according to any of the preceding claims wherein the compressed food material is compressed freeze-dried food material.

10. Process according to anyone of the preceding claims wherein at least 80% (by weight) of the compressed food material has a size of from 0.5 mm to 50 mm, as measured in rehydrated state and along the longest diameter.

11. Process according to anyone of claims 1 to 10, wherein the gelling system comprises a hydrocolloid gelling system, preferably a combination of xanthan gum and locust bean gum.

12. Packaged food concentrate obtainable by the process according to anyone of claims 1-11, wherein the food concentrate comprises:
• a gel matrix,
• at least one aggregate comprising particulate food material.

13. Packaged food concentrate according to claim 12, wherein the particulate food material has a water content of between 30 wt% and 75 wt%, preferably of between 35 wt% and 70 wt% more preferably of between 40 wt% and 65 wt%, based on the weight of the particulate food material.

14. Packaged food concentrate according to anyone of claims 12 or 13, further comprising salt, wherein the food concentrate after dilution in an aqueous liquid can result in a ready-to-eat end product comprising salt in an amount of from 0.5 wt% to 1.5 wt%, and particulate food material in an amount of from 1 wt% to 30 wt%,'based on the weight of the ready to eat end product.

15. Process to prepare a ready-to-eat end product comprising the step of dissolving a food concentrate according to anyone of claim 12 to 14 in an aqueous liquid, to result in a ready-to-eat end product.

## Patentansprüche

1. Verfahren zum Herstellen eines abgepackten Lebensmittelkonzentrats mit dem Aussehen eines Gels,
das die folgenden Schritte aufweist:
a) Bereitstellen einer Lösung, die Folgendes aufweist:
• Wasser,
• eine wirksame Menge eines Geliersystems,
b) Kombinieren der im Schritt a) entstandenen Lösung mit zumindest einem Gegenstand, der gepresstes Lebensmittelmaterial aufweist,
c) Verpacken der im Schritt b) entstandenen Kombination,
d) Festwerdenlassen der im Schritt c) entstandenen Kombination,
um ein abgepacktes Lebensmittelkonzentrat mit dem Aussehen eines Gels zu erhalten.

2. Verfahren nach Anspruch 1,
wobei der zumindest eine Gegenstand, der gepresstes Lebensmittelmaterial aufweist, einen Wassergehalt von 1 bis 30 Gew.-%, vorzugsweise von 5 bis 25 Gew.-% aufweist, und zwar auf das Gewicht des zumindest einen Gegenstandes bezogen, der gepresstes Lebensmittelmaterial aufweist.

3. Verfahren nach einem der vorstehenden Ansprüche,
wobei die Lösung vom Schritt a) 2 bis 25 Gew.-% Salz aufweist, und zwar auf das Gewicht des gesamten Lebensmittelkonzentrats bezogen.

4. Verfahren nach Anspruch 1,
das die folgenden Schritte aufweist:
a) Bereitstellen einer Lösung, die Folgendes aufweist:
• 40 bis 65 Gew.-% Wasser (auf das Gewicht des gesamten Lebensmittelkonzentrats bezogen),
• Xanthangummi und Johannisbrotkernmehl in einer Gesamtmenge von 0,6 bis 1,5 Gew.-% (auf das Gewicht der flüssigen Phase bezogen),
• 5 bis 18 Gew.-% Salz (auf das Gewicht des gesamten Lebensmittelkonzentrats bezogen),
b) Kombinieren der im Schritt a) entstandenen Lösung mit zumindest einem Gegenstand, der gepresstes Lebensmittelmaterial aufweist, wobei der Gegenstand, der gepresstes Lebensmittelmaterial aufweist, einen Wassergehalt von 1 bis 30 Gel.-%, vorzugsweise von 5 bis 25 Gew.-% aufweist, und zwar auf das Gewicht des Gegenstandes bezogen,
c) Verpacken der im Schritt b) entstandenen Kombination,
d) Festwerdenlassen der im Schritt c) entstandenen Kombination,
um ein abgepacktes Lebensmittelkonzentrat mit dem Aussehen eines Gels zu erhalten.

5. Verfahren nach einem der vorstehenden Ansprüche,
wobei der zumindest eine Gegenstand, der gepresstes Lebensmittelmaterial aufweist, einen Überzug aufweist.

6. Verfahren nach einem der vorstehenden Ansprüche,
wobei das Gewicht des zumindest einen Gegenstandes, der gepresstes Lebensmittelmaterial aufweist, 2 bis 95 Gew.-%, vorzugsweise 10 bis 70 Gew.-%, stärker bevorzugt 15 bis 60 Gew.-% beträgt, und zwar auf das Gewicht des gesamten Lebensmittelkonzentrats bezogen.

7. Verfahren nach einem der vorstehenden Ansprüche,
wobei das Gemisch im Schritt b) mit 1 bis 10, vorzugsweise 1 bis 5, stärker bevorzugt 1 bis 3 Gegenständen kombiniert wird, die gepresstes Lebensmittelmaterial aufweisen.

8. Verfahren nach einem der vorstehenden Ansprüche,
wobei das gepresste Lebensmittelmaterial aus der Gruppe ausgewählt ist, die aus Gemüse, Pilzen, Kräutern, Fleisch, Fisch, Krustentieren, Teigwaren und Gemischen davon besteht.

9. Verfahren nach einem der vorstehenden Ansprüche,
wobei das gepresste Lebensmittelmaterial gepresstes, gefriergetrocknetes Lebensmittelmaterial ist.

10. Verfahren nach einem der vorstehenden Ansprüche,
wobei mindestens 80 % (auf das Gewicht bezogen) des gepressten Lebensmittelmaterials eine Größe von 0,5 bis 50 mm haben, und zwar im rehydratisierten Zustand und entlang des längsten Durchmessers gemessen.

11. Verfahren nach einem der Ansprüche 1 bis 10,
wobei das Geliersystem ein Hydrokolloid-Geliersystem, vorzugsweise eine Kombination aus Xanthangummi und Johannisbrotkernmehl, aufweist.

12. Abgepacktes Lebensmittelkonzentrat, das nach dem Verfahren nach einem der Ansprüche 1 bis 11 erhalten werden kann,
wobei das Lebensmittelkonzentrat Folgendes aufweist:
• eine Gelmatrix,
• zumindest ein Aggregat, das teilchenförmiges Lebensmittelmaterial aufweist.

13. Abgepacktes Lebensmittelkonzentrat nach Anspruch 12,
wobei das teilchenförmige Lebensmittelmaterial einen Wassergehalt von 30 bis 75 Gew.-%, vorzugsweise von 35 bis 70 Gew.-%, stärker bevorzugt von 40 bis 65 Gew.-% aufweist, und zwar auf das Gewicht des teilchenförmigen Lebensmittelmaterials bezogen.

14. Abgepacktes Lebensmittelkonzentrat nach einem der Ansprüche 12 oder 13, das ferner Salz aufweist, wobei das Lebensmittelkonzentrat nach dem Verdünnen in einer wässrigen Flüssigkeit zu einem verzehrfertigen Endprodukt führen kann, das Salz in einer Menge von 0,5 bis 1,5 Gew.-% und teilchenförmiges Lebensmittelmaterial in einer Menge von 1 bis 30 Gew.-% aufweist, und zwar auf das Gewicht des verzehrfertigen Endproduktes bezogen.

15. Verfahren zum Herstellen eines verzehrfertigen Endproduktes,
das den Schritt des Lösens eines Lebensmittelkonzentrats nach einem der Ansprüche 12 bis 14 in eine wässrigen Flüssigkeit aufweist, um ein verzehrfertiges Endprodukt zu erhalten.

## Revendications

1. Procédé de préparation d'un concentré alimentaire emballé avec l'apparence d'un gel, comprenant les étapes consistant :
a) à fournir une solution comprenant :
. de l'eau,
. une quantité efficace de système gélifiant,
b) à combiner la solution résultante de l'étape a) avec au moins un article comprenant un matériau alimentaire comprimé,
c) à emballer la combinaison résultante de l'étape b),
d) à solidifier la combinaison résultante de l'étape c),
pour résulter en un concentré alimentaire emballé avec l'apparence d'un gel

2. Procédé selon la revendication 1, dans lequel le au moins un article comprenant un matériau alimentaire comprimé présente une teneur en eau de 1 à 30 % en poids, de préférence de 5 à 25 % en poids rapporté au poids du au moins un article comprenant un matériau alimentaire comprimé.

3. Procédé selon l'une quelconque des revendications précédentes, dans lequel la solution de l'étape a) comprend de 2 à 25 % en poids de sel, rapporté au poids du concentré alimentaire total.

4. Procédé selon la revendication 1, comprenant les étapes consistant :
a) à fournir une solution comprenant :
. de 40 à 65 % en poids d'eau (rapporté au poids du concentré alimentaire total),
. de la gomme xanthane et de la gomme de caroube dans une quantité totale de 0,6 à 1,5 % en poids (rapporté au poids de la phase liquide),
. de 5 à 18 % en poids de sel (rapporté au poids du concentré alimentaire total),
b) à combiner la solution résultante de l'étape a) avec au moins un article comprenant un matériau alimentaire comprimé, dans lequel l'article comprenant un matériau alimentaire comprimé présente une teneur en eau de 1 à 30 % en poids, de préférence de 5 à 25 % en poids rapporté au poids de l'article,
c) à emballer la combinaison résultante de l'étape b),
d) à solidifier la combinaison résultante de l'étape c),
pour résulter en un concentré alimentaire emballé avec l'apparence d'un gel.

5. Procédé selon l'une quelconque des revendications précédentes, dans lequel le au moins un article comprenant un matériau alimentaire comprimé comprend un revêtement.

6. Procédé selon l'une quelconque des revendications précédentes, dans lequel le poids du au moins un article comprenant un matériau alimentaire comprimé est de 2 % en poids à 95 % en poids, de préférence de 10 % en poids à 70 % en poids, encore mieux de 15 % en poids à 60 % en poids, rapporté au poids du concentré alimentaire total.

7. Procédé selon l'une quelconque des revendications précédentes, dans lequel dans l'étape b) le mélange est combiné avec de 1 à 10, de préférence de 1 à 5, encore mieux de 1 à 3 articles comprenant un matériau alimentaire comprimé.

8. Procédé selon l'une quelconque des revendications précédentes, dans lequel le matériau alimentaire comprimé est choisi dans le groupe constitué de légumes, de champignons, d'herbes, de viande, de poisson, de crustacés, de pâtes et de mélanges de ceux-ci.

9. Procédé selon l'une quelconque des revendications précédentes, dans lequel le matériau alimentaire comprimé est un matériau alimentaire lyophilisé comprimé.

10. Procédé selon l'une quelconque des revendications précédentes, dans lequel au moins 80 % (en poids) du matériau alimentaire comprimé présentent une dimension de 0,5 mm à 50 mm, comme mesurée dans un état réhydraté et le long du diamètre le plus long.

11. Procédé selon l'une quelconque des revendications 1 à 10, dans lequel le système gélifiant comprend un système gélifiant d'hydrocolloïde, de préférence une combinaison de gomme xanthane et de gomme de caroube.

12. Concentré alimentaire emballé pouvant être obtenu par le procédé selon l'une quelconque des revendications 1-11, dans lequel le concentré alimentaire comprend :
. une matrice de gel,
. au moins un agrégat comprenant un matériau alimentaire particulaire.

13. Concentré alimentaire emballé selon la revendication 12, dans lequel le matériau alimentaire particulaire présente une teneur en eau de 30 % en poids à 75 % en poids, de préférence de 35 % en poids à 70 % en poids, encore mieux de 40 % en poids à 65 % en poids, rapporté au poids du matériau alimentaire particulaire.

14. Concentré alimentaire emballé selon l'une quelconque des revendications 12 ou 13, comprenant de plus du sel, dans lequel le concentré alimentaire après dilution dans un liquide aqueux peut résulter en un produit final prêt à être consommé comprenant du sel dans une quantité de 0,5 % en poids à 1,5 % en poids, et un matériau alimentaire particulaire dans une quantité de 1 % en poids à 30 % en poids, rapporté au poids du produit final prêt à être consommé.

15. Procédé pour préparer un produit final prêt à être consommé comprenant l'étape de dissolution d'un concentré alimentaire selon l'une quelconque des revendications 12 à 14 dans un liquide aqueux, pour résulter en un produit final prêt à être consommé.
